# EUROPÄISCHE PATENTANMELDUNG

(11) **EP 1 369 162 A1**
(43) Veröffentlichungstag der Anmeldung: **10.12.2003**
(21) Anmeldenummer: 03010335.2
(22) Anmeldetag: 08.05.2003
(51) Int. Cl.: B01D 46/52

(54) **Abschlusselement für einen Filtereinsatz**

(30) Priorität: 03.06.2002 DE 10224676
(71) Anmelder: Carl Freudenberg KG, 69469 Weinheim (DE)
(72) Erfinder: Kadel, Werner, 69488 Birkenau (DE); Bräunling, Volker, 64646 Heppenheim (DE); Tritsch, Armin, 69469 Weinheim (DE)

(57) **Zusammenfassung**

Abschlusselement für einen Filtereinsatz aus einem zickzackförmig gefalteten Faltenpack für die parallel zur Faltung verlaufenden Stirnseiten des Faltenpacks, aus einem wenigstens eine Faltkante des Faltenpacks überdeckenden Versteifungsstreifen und einem mit dem Versteifungsstreifen integral verbundenen Dichtelement, wobei Versteifungsstreifen (2) aus einem steifen Kunststoff mit einem E-Modul größer 1000 N/mm², vorzugsweise aus Polypropylen und das Dichtelement (3) aus einem elastischen Kunststoff mit einer Shorehärte kleiner 100 Shore, vorzugsweise aus einem thermoplastischem Elastomer besteht, wobei das Abschlusselement (1) als Endlosprofil herstellbar ist, vorzugsweise in Extrusionstechnik, und als Endlosprofil aufwickelbar ist, vorzugsweise mit einem Wickelaußendurchmesser zwischen 1 und 1,5 m und dass das Abschlusselement (1) mit mindestens einer Faltkante (6) des Filterpacks (4) stoffschlüssig verbunden wird, vorzugsweise mit Ultraschall-Schweißtechnik.

## Beschreibung

### Technisches Gebiet

Die Erfindung befasst sich mit einem Abschlusselement für einen Filtereinsatz aus einem zickzackförmig gefalteten Faltenpack für die parallel zur Faltung verlaufenden Stirnseiten des Faltenpacks, aus einem wenigstens eine Faltkante des Faltenpacks überdeckenden Versteifungsstreifen und einem mit dem Versteifungsstreifen integral verbundenen Dichtelement.

### Stand der Technik

Es ist bekannt Filtereinsätze aus thermoplastisch verschweißbaren Vliesstoff herzustellen, die als Faltenpack ausgebildet sind, wobei der Faltenpack in ein Gehäuse dichtend eingesetzt wird. Einen solchen Filtereinsatz zeigt die DE 195 12 678 C1. Bei diesem Filtereinsatz werden die Stirnseiten des Faltenpacks jeweils mit einer kombinierten Dichtungs- und Versteifungslasche versehen, die im Querschnitt gesehen, Wurzelzeichenförmig ausgebildet sind. Die Dichtungslasche hat einen V-förmigen Querschnitt, der auf der Anströmseite des zu filternden Mediums offen ist und liegt unter elastischer Vorspannung dichtend am Gehäuse an.

Eine weitere Möglichkeit der Abdichtung, ist der älteren Patentanmeldung DE 100 13 301 zu entnehmen. Dort sind bei einem Filtereinsatz aus einem zickzackförmig gefalteten Filterpack an dem parallel zur Faltung verlaufenden Stirnseiten des Faltenpacks Abschlusselemente vorgesehen, die aus den Faltenpack wenigstens auf seiner Ausströmseite teilweise überdeckenden Versteifungsstreifen und aus mit den Versteifungsstreifen integral verbundenen Dichtelementen bestehen.

### Darstellung der Erfindung

Der Erfindung liegt die Aufgabe zu Grunde, die bekannten Filtereinsätze weiterzuentwickeln hinsichtlich effektiver stirnseitiger Abdichtung gegenüber dem Gehäuse und ihrer Herstellung herstellbar in einem Prozess mit hoher Wirtschaftlichkeit. Eine effektive stirnseitige Abdichtung ist nicht nur eine Frage des Dichtelementdesigns, hierfür ist auch eine wesentliche Erhöhung der Biegesteifigkeit der Filterstirnseite erforderlich. Das Ziel hinsichtlich Wirtschaftlichkeit bei hohen Produktionsstückzahlen ist ein stirnseitiges Abschlusselement, das vollautomatisch mit kurzer Taktzeit montierbar ist.

Die Lösung der gestellten Aufgabe wird mit den Merkmalen der Ansprüche 1 und 3 erreicht. Der Unteranspruch 2 stellt eine vorteilhafte Ausgestaltung des erfindungsgemäßen Abschlusselements dar.

Gemäß der vorliegenden Erfindung besteht das stirnseitige Abschlusselement für einen zickzackförmig gefalteten Filtereinsatz aus einem Versteifungsstreifen und einem damit integral verbundenen Dichtelement. Vorzugsweise ist der Versteifungsstreifen aus Polypropylen und das Dichtelement aus einem thermoplastischen Elastomer. Um die gewünschte Steifheit des Dichtelements zu erreichen sollte dessen E-Modul größer als 1000 N/mm² sein. Das Dichtelement dagegen soll möglichst weich sein und eine Shorehärte von kleiner als 100 Shore haben

Design, Werkstoff und Herstelltechnik des Abschlusselements ermöglichen einerseits die Erfüllung der geforderten Funktionen "Dichten und Versteifen". Andererseits kann das Abschlusselement endlos hergestellt, als Wickel transportiert, zwischengelagert und in einem kurztaktigen automatischen Prozess abgerollt, abgelängt und auf dem Filterpack montiert werden.

Die Versteifungsstreifen werden an den parallel zur Faltung verlaufenden Stirnseiten des Faltenpacks angebracht. Dieses geschieht vorzugsweise durch Verschweißen des Versteifungsstreifens mit zwei Faltkanten des Faltenpacks mittels Ultraschall. Das Dichtelement ist zum Versteifungsstreifen abgewinkelt angeordnet und liegt beim eingesetzten Filter dichtend an der Gehäusewand an.

Die Herstellung des Abschlusselements selbst, kann durch Extrusion erfolgen, in dem der Versteifungsstreifen und das Dichtelement gleichzeitig mit zwei verschiedenen Werkstoffspezifikationen aus einer Extruderdüse endlos extrudiert und danach für den Transport und die Zwischenlagerung aufgewickelt werden.

Das Abschlusselement ist sowohl als Einzel- als auch als Doppelelement herstellbar. Ein Doppelelement besteht aus zwei spiegelbildlich angeordneten Abschlusselementen, die stoffschlüssig miteinander verbunden sind. Das bringt deshalb weitere wirtschaftliche Vorteile, weil in der Regel je Filterpack zwei Abschlusselemente benötigt werden.

### Kurzbeschreibung der Zeichnung

Anhand zweier Ausführungsbeispiele wird die Erfindung nachstehend näher erläutert.

Es zeigt:
- Figur 1: die Endfaltung eines Faltenpacks versehen mit einem Abschlusselement in der Seitenansicht,
- Figur 2: einen Schnitt durch ein im Extrusionsverfahren hergestelltes Endlosprofil des Abschlusselements, das als Doppelelement gestaltet ist.
- Figur 3: die Endfaltung eines Faltenpacks mit einem Abschlusselement, dessen Versteifungselement zusätzlich eine rechtwinklig abgeklappte Lasche mit zwei Dichtelementen aufweist.
- Figur 4: einen Schnitt durch ein extrudiertes Abschlusselement zum Einsatz gemäß Figur 3.

### Ausführung der Erfindung

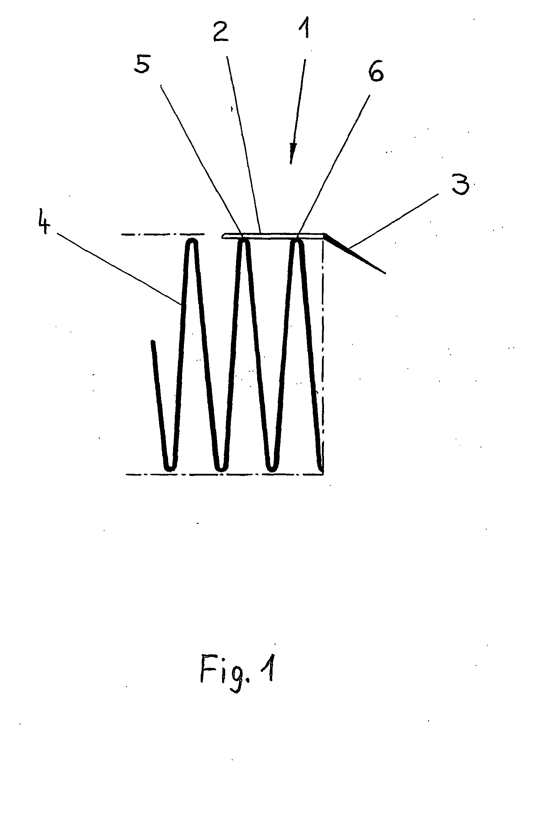

Das in der Figur 1 gezeigte Abschlusselement 1, besteht aus dem Versteifungsstreifen 2 und dem damit integral verbundenen Dichtelement 3. Vom Faltenpack 4 ist lediglich ein stirnseitiges Ende gezeigt. Der Versteifungsstreifen 2, ist mit den letzten beiden Faltenkanten 5 und 6 des Faltenpacks 4 verschweißt oder verklebt. Der Faltenpack 4 besteht in an sich bekannter Weise bevorzugt aus einem thermoplastisch verschweißbaren Vliesstoff. Der Versteifungsstreifen 2 erzielt in stoffschlüssiger Verbindung mit dem Filterpack 4 die geforderte wesentliche Erhöhung der Biegesteifigkeit.

Das Abschlusselement 1, besteht aus zwei verschiedenen Werkstoffen. Der Werkstoff für den Versteifungsstreifen 2 ist ein steifer extrudierbarer Kunststoff mit einem E-Modul größer 1000 N/mm². Der Werkstoff für das Dichtelement 3 ist ein elastischer Werkstoff mit einer Shorehärte kleiner 100 Shore. Das Abschlusselement 1 wird als Endlosstreifen vorzugsweise in einem Extrusionsprozess hergestellt. Die bevorzugte Werkstoffauswahl sieht für den Versteifungsstreifen Polypropylen und für das Dichtelement einen thermoplastischem Elastomer vor.

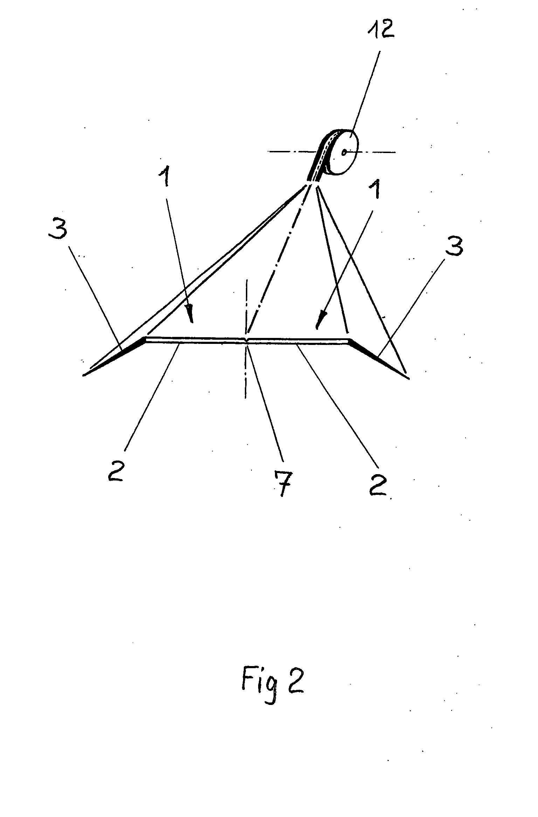

In der Figur 2, ist ein Extrusionsprofil zweier Abschlusselemente 1 gezeigt. Hier verlassen zwei Abschlusselemente 1 gleichzeitig als Endlosstreifen die Extrusionsdüse. Die beiden Abschlusselemente 1 sind spiegelbildlich zueinander angeordnet. Sie sind stoffschlüssig miteinander verbunden und haben eine Trennnut 7 an der Stelle, an der sie später, unmittelbar vor der Montage getrennt werden. In perspektivischer Darstellung ist das Aufwickeln der Abschlusselemente 1 auf einen Wickel 12 schematisch angedeutet.

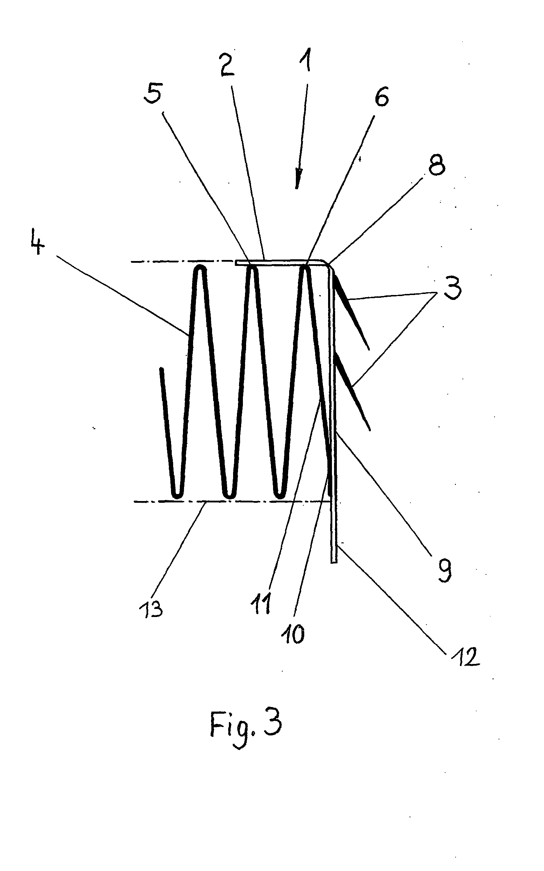

In der Figur 3 ist in der Seitenansicht ein Abschlusselement 1 gezeigt, bei dem der Versteifungsstreifen 2 stoffschlüssig über ein Filmscharnier 8 mit einer Lasche 9 versehen ist, welche gleichzeitig die stirnseitige Abschlusswand des Filterpacks 4 bildet und darüber hinaus eine Verdrehsicherung gegen einen ungewollten falschen Einsatz des Faltenpacks 4 darstellt. Der Verdrehschutz ist dann von Bedeutung, wenn die Durchströmrichtung durch das Faltenpack 4 vorgegeben ist. Der Verdrehschutz wird in einfacher Weise durch eine Verlängerung 12 der Lasche 9 erreicht, die über die Ebene 13 des Faltenpacks 4 hinaussteht. Die Lasche 9 wird relativ zum Versteifungsstreifen 2 in dem Filmscharnier 8 um ca. 90° abgeklappt und mit der Flanke 10 der letzten Falte 11 des Faltpacks 4 verschweißt. Versteifungsstreifen 2 und Lasche 9 sind aus dem gleichen Werkstoff. Mit der Lasche 9 sind integral zwei Dichtelemente 3 verbunden. Damit können höchste Anforderungen an die Dichtfunktion erfüllt werden, z.B. eine Doppeldichtlippe, wenn eine Einzellippe nicht ausreichend ist.

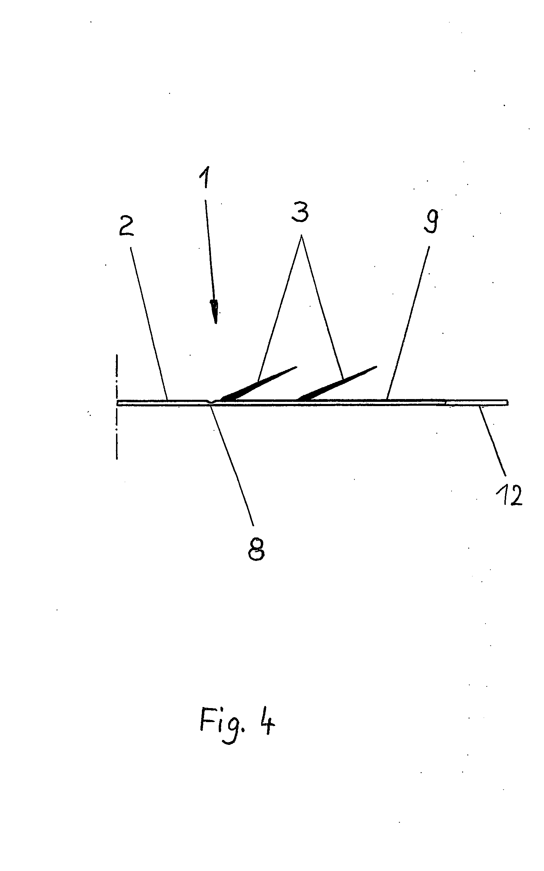

In der Figur 4 ist im Schnitt ein extrudiertes Abschlusselement 1 gezeigt, wie es bei einem Filterpack 4 nach Figur 3 eingesetzt werden kann. Das Abschlusselement 1 besteht aus dem Versteifungsstreifen 2, der Lasche 9, dem Filmscharnier 8 und Dichtelementen 3, hier z.B. zwei Dichtelemente. Das Filmscharnier 8 bestimmt die Drehachse beim Abklappen der Lasche 9. Das Abschlusselement 1 nach Figur 4 ist analog zu Figur 2 ebenso als Doppelelement mit Trennnut 7 extrudierbar und aufwickelbar.

## Patentansprüche

1. Abschlusselement für einen Filtereinsatz aus einem zickzackförmig gefalteten Faltenpack für die parallel zur Faltung verlaufenden Stirnseiten des Faltenpacks, aus einem wenigstens eine Faltkante des Faltenpacks überdeckenden Versteifungsstreifen und einem mit dem Versteifungsstreifen integral verbundenen Dichtelement, **dadurch gekennzeichnet, dass** der Versteifungsstreifen (2) aus einem steifen Kunststoff mit einem E-Modul größer 1000 N/mm², vorzugsweise aus Polypropylen und das Dichtelement (3) aus einem elastischen Kunststoff mit einer Shorehärte kleiner 100 Shore, vorzugsweise aus einem thermoplastischem Elastomer besteht, wobei das Abschlusselement (1) als Endlosprofil herstellbar ist, vorzugsweise in Extrusionstechnik, und als Endlosprofil aufwickelbar ist, vorzugsweise mit einem Wickelaußendurchmesser zwischen 1 und 1,5 m und dass das Abschlusselement (1) mit mindestens einer Faltkante (6) des Filterpacks (4) stoffschlüssig verbunden wird, vorzugsweise mit Ultraschall-Schweißtechnik.

2. Abschlusselement für einen Filtereinsatz nach Anspruch 1, **dadurch gekennzeichnet, dass** der Versteifungsstreifen (2) zusätzlich eine über ein Filmscharnier (8) angekoppelte Lasche (9) hat, welche rechtwinklig zum Versteifungsstreifen (2) abgeklappt und mit der Flanke (10) der Endfalte (11) des Filterpacks (4) stoffschlüssig verbunden ist, wobei eine oder mehrere Dichtelemente (3) integral mit der Lasche (9) und/oder dem Versteifungsstreifen (2) verbunden ist oder sind.

3. Verfahren zur Herstellung eines Abschlusselements für einen Filtereinsatz aus einem zickzackförmig gefalteten Faltenpack für die parallel zur Faltung verlaufenden Stirnseiten des Faltenpacks, aus einem wenigstens eine Faltkante des Faltenpacks überdeckenden Versteifungsstreifen und einem mit dem Versteifungsstreifen integral verbundenen Dichtelement, **dadurch gekennzeichnet, dass** der Versteifungsstreifen (2) und das Dichtelement (3), gleichzeitig aus einer Extruderdüse endlos extrudiert und unmittelbar danach aufgewickelt werden, dass alternativ zum Einzelprofil auch die Extrusion eines Doppelprofils möglich ist, wobei das Doppelprofil aus zwei spiegelgleich angeordneten Abschlusselementen (1) und eine Trennnut (7) an der Stelle aufweist, an der das Doppelprofil später zu zwei Einzelprofilen getrennt wird, dass der Transport und die Zwischenlagerung zwischen der Extrusion und der Montage der Abschlusselemente (1) in Form von Wickeln stattfindet, dass erst unmittelbar vor der Montage die Abschlusselemente (1) auf Nennlänge gebracht werden und dass die Verbindung der Abschlusselemente (1) mit den Faltkanten (5, 6) des Filterpacks (4) in stoffschlüssiger Verbindungstechnik, vorzugsweise mit Ultraschall-Schweisstechnik geschieht.
